# EUROPÄISCHE PATENTSCHRIFT

(11) **EP 3 460 187 B1**
(45) Veröffentlichungstag und Bekanntmachung des Hinweises auf die Patenterteilung: **14.07.2021**
(21) Anmeldenummer: 18193086.8
(22) Anmeldetag: 07.09.2018
(51) Int. Cl.: F01D 5/14, F01D 5/22

(54) **SCHAUFEL FÜR EINE STRÖMUNGSMASCHINE**
BLADE FOR A TURBOMACHINE
AUBE POUR UNE TURBOMACHINE

(30) Priorität: 20.09.2017 DE 102017216620
(43) Veröffentlichungstag der Anmeldung: 27.03.2019
(73) Patentinhaber: MTU Aero Engines AG, 80995 München (DE)
(72) Erfinder: Pernleitner, Martin, 85221 Dachau (DE); Dopfer, Manfred, 85716 Unterschleissheim (DE); Theurich, Daniel, 82131 Stockdorf (DE)

(56) Entgegenhaltungen:
- EP-A2- 1 471 209
- WO-A2-2011/015193
- US-A1- 2003 118 447
- US-A1- 2015 361 808

## Beschreibung

Die Erfindung betrifft eine Schaufel für eine Strömungsmaschine, insbesondere für eine Gasturbine. Die Erfindung betrifft weiterhin eine Strömungsmaschine, einen Verdichter sowie eine Turbine mit einer Stator- und/oder Rotorbeschaufelung.

Bei modernen Strömungsmaschinen, beispielsweise bei Flugturbinen, sind insbesondere die Schaufeln stromabliegender Stufen sehr hoch statisch ausgelastet. Hinzu kommt eine dynamische Anregung durch unterschiedlichste Erregungen bestimmter Ordnungen. Diese Kombination kann im schlimmsten Fall zu einer Beschädigung der Schaufeln führen. Daher ist es bekannt, Schaufeln ausgehend von einem aerodynamisch optimalen Schaufelprofil lokal aufzudicken, um die statischen und/oder dynamischen Belastungen mit möglichst geringer aerodynamischer Beeinträchtigung zu reduzieren. Beispielsweise ist es aus der WO 2011/015193 A2 bekannt, eine Druckseite des Schaufelblatts einer Schaufel mit einer konvexen Aufdickung zu versehen.

US 2015/0361808 A1, US 2003/0118447 A1 und EP 1 471 209 A2 befassen sich mit Schaufeln für Gasturbinentriebwerke, deren Schaufelblätter mindestens eine Aufdickung auf einer Druckseite des Schaufelblatts aufweisen, wobei die Aufdickung einen Bereich mit konstanter Dicke umfasst.

Aufgabe der vorliegenden Erfindung ist es, eine Schaufel für eine Strömungsmaschine bereitzustellen, welche ein aerodynamisch günstiges Schaufelprofil bei gleichzeitig hoher mechanischer Stabilität aufweist. Weitere Aufgaben der Erfindung bestehen darin, eine Strömungsmaschine, einen Verdichter und eine Turbine bereitzustellen, welche jeweils eine aerodynamisch günstige Stator- und/oder Rotorbeschaufelung mit gleichzeitig hoher mechanischer Stabilität aufweisen.

Die Aufgaben werden erfindungsgemäß durch eine Schaufel mit den Merkmalen des Patentanspruchs 1, durch eine Strömungsmaschine gemäß Patentanspruch 9, einen Verdichter gemäß Patentanspruch 10 sowie durch eine Turbine gemäß Patentanspruch 11 gelöst. Vorteilhafte Ausgestaltungen mit zweckmäßigen Weiterbildungen der Erfindung sind in den Unteransprüchen angegeben, wobei vorteilhafte Ausgestaltungen jedes Erfindungsaspekts als vorteilhafte Ausgestaltungen der jeweils anderen Erfindungsaspekte anzusehen sind.

Ein erster Aspekt der Erfindung betrifft eine Schaufel für eine Strömungsmaschine, wobei die Schaufel ein Schaufelblatt mit mindestens einer Aufdickung auf einer Druckseite des Schaufelblatts umfasst. Ein aerodynamisch günstiges Schaufelprofil wird bei gleichzeitig hoher mechanischer Stabilität dadurch sichergestellt, dass die Aufdickung einen Bereich mit konstanter Dicke aufweist, wobei der Bereich mit konstanter Dicke eine Oberfläche aufweist, welche mindestens 20 % einer Gesamtfläche der Aufdickung entspricht. Die Oberfläche des Bereichs mit konstanter Dicke besitzt mindestens einen Anteil von 20 %, 21 %, 22 %, 23 %, 24 %, 25 %, 26 %, 27 %, 28 %, 29 %, 30 %, 31 %, 32 %, 33 %, 34 %, 35 %, 36 %, 37 %, 38 %, 39 %, 40 %, 41 %, 42 %, 43 %, 44 %, 45 %, 46 %, 47 %, 48 %, 49 %, 50 %, 51 %, 52 %, 53 %, 54 %, 55 %, 56 %, 57 %, 58 %, 59 %, 60 %, 61 %, 62 %, 63 %, 64 %, 65 %, 66 %, 67 %, 68 %, 69 %, 70 %, 71 %, 72 %, 73 %, 74 %, 75 %, 76 %, 77 %, 78 %, 79 %, 80 %, 81 %, 82 %, 83 %, 84 %, 85 %, 86 %, 87 %, 88 %, 89 % oder 90 %, 91 %, 92 %, 93 %, 94 %, 95 %, 96 %, 97 %, 98 % oder 99 % an der Gesamtoberfläche der Aufdickung. Hierdurch kann die mechanische Stabilität optimal unter Berücksichtigung der jeweiligen aerodynamischen Eigenschaften eingestellt werden. Möglichst vorteilhafte aerodynamische Eigenschaften werden erfindungsgemäß dadurch erreicht, dass die Aufdickung wenigstens einen Randbereich umfasst, dessen Dicke ausgehend vom Bereich mit konstanter Dicke kontinuierlich bis zu einer normalen Profildicke des Schaufelblatts ohne Aufdickung abnimmt. Hierdurch kann die Anströmung der Aufdickung strömungsmechanisch besonders vorteilhaft und störungsarm erfolgen. Dabei umgibt der Randbereich den Bereich mit konstanter Dicke U-förmig. Hierdurch kann eine strömungsmechanisch besonders günstige An- und Abströmung erreicht werden. Dies ist insbesondere dann von Vorteil, wenn die Aufdickung nach radial außen hin mit einem radialen Endbereich des Schaufelblatts abschließt. Die lokale Aufdickung folgt damit zumindest in diesem Bereich konstanter Dicke quasi in der Art einer Briefmarke (Patch) der Kontur des (gedachten) aufdickungslosen Schaufelprofils. Die restlichen Bereiche des Schaufelblatts können demgegenüber ein aerodynamisch optimiertes und vergleichsweise dünneres Schaufelblattprofil aufweisen. Durch die lokale Aufdickung des Schaufelblatts wird die statische Belastung der Schaufel reduziert. Durch die geringere statische Belastung der Schaufel entsteht eine höhere Reserve für die Kombination mit Schwingbelastungen. Vorzugsweise ist die Aufdickung integraler Teil des Schaufelblatts bzw. gemeinsam mit dem Schaufelblatt urgeformt. Dies kann durch eine entsprechende Anpassung von gegebenenfalls bereits vorhandenen Gußwerkzeugen erfolgen. Alternativ kann die Aufdickung zusammen mit dem Schaufelblatt additiv hergestellt und/oder durch ein Trennverfahren erzeugt werden. Alternativ kann die Aufdickung beispielsweise durch Auftragsschweißen oder andere Beschichtungsverfahren nachträglich hergestellt werden, wodurch auch bereits vorhandene Schaufeln mit der vorteilhaften Aufdickung ausgestattet werden können. Generell sind "ein/eine" im Rahmen dieser Offenbarung als unbestimmte Artikel zu lesen, also ohne ausdrücklich gegenteilige Angabe immer auch als "mindestens ein/mindestens eine". Umgekehrt können "ein/eine" auch als "nur ein/nur eine" verstanden werden.

In einer weiteren vorteilhaften Ausgestaltung der Erfindung ist vorgesehen, dass eine maximale Länge des Bereichs mit konstanter Dicke mindestens 1 % und/oder maximal 90 % einer maximalen Gesamtlänge der Aufdickung entspricht. In Abhängigkeit der Geometrie des Bereichs mit konstanter Dicke kann dessen maximale Länge also beispielsweise 1 %, 2 %, 3 %, 4 %, 5 %, 6 %, 7 %, 8 %, 9 %, 10 %, 11 %, 12 %, 13 %, 14 %, 15 %, 16 %, 17 %, 18 %, 19 %, 20 %, 21 %, 22 %, 23 %, 24 %, 25 %, 26 %, 27 %, 28 %, 29 %, 30 %, 31 %, 32 %, 33 %, 34 %, 35 %, 36 %, 37 %, 38 %, 39 %, 40 %, 41 %, 42 %, 43 %, 44 %, 45 %, 46 %, 47 %, 48 %, 49 %, 50 %, 51 %, 52 %, 53 %, 54 %, 55 %, 56 %, 57 %, 58 %, 59 %, 60 %, 61 %, 62 %, 63 %, 64 %, 65 %, 66 %, 67 %, 68 %, 69 %, 70 %, 71 %, 72 %, 73 %, 74 %, 75 %, 76 %, 77 %, 78 %, 79 %, 80 %, 81 %, 82 %, 83 %, 84 %, 85 %, 86 %, 87 %, 88 %, 89 %, 90 %, 91 %, 92 %, 93 %, 94 %, 95 %, 96 %, 97 %, 98 %, 99 % oder 100 % bzw. 90 %, 89 %, 88 %, 87 %, 86 %, 85 %, 84 %, 83 %, 82 %, 81 %, 80 % oder weniger der maximalen Gesamtlänge der Aufdickung entsprechen. Wenn die Aufdickung beispielsweise zumindest im Wesentlichen rechteckig ausgebildet ist, entspricht die maximale Gesamtlänge zumindest im Wesentlichen der Diagonalen, ist die Aufdickung beispielsweise im Wesentlichen kreisförmig, entspricht die maximale Gesamtlänge dem Durchmesser. Bei anderen Geometrien sind die maximale Gesamtlänge der Aufdickung sowie die maximale Länge des Bereichs konstanter Dicke entsprechend individuell zu bestimmen. Im Rahmen der vorliegenden Offenbarung beziehen sich die Begriff "Länge" bzw. "Breite" generell auf eine "axiale Erstreckung", während sich der Begriff "Höhe" auf eine "radiale Erstreckung" im eingebauten Zustand der Schaufel bezieht. Dabei kann die Aufdickung insbesondere mit einem Verhältnis von größerer zu kleinerer Rechteckseitenlänge von ≤ 10:1, vorzugsweise ≤ 5:1, insbesondere ≤ 2:1 ausgebildet sein.

Eine besonders hohe mechanische Stabilität wird in weiterer Ausgestaltung der Erfindung dadurch erreicht, dass die Aufdickung und/oder der Bereich mit konstanter Dicke zumindest im Wesentlichen rechteckig ausgebildet ist bzw. sind. Unter einer "zumindest im Wesentlichen rechteckigen" Geometrie sind dabei sowohl streng rechteckige bzw. quadratische Geometrien sowie entsprechende Geometrien mit einer oder mehreren abgerundeten Ecken zu verstehen.

Weitere Vorteile ergeben sich, indem die Aufdickung von einer Vorderkante und/oder von einer Hinterkante des Schaufelblatts beabstandet ausgebildet ist. Mit anderen Worten ist es vorgesehen, dass die Aufdickung nicht unmittelbar an die Vorderkante und/oder Hinterkante des Schaufelblatts anschließt, sondern in einem Mindestabstand bezogen auf eine Sehnenlängentangente des Schaufelblatts angeordnet ist. Hierdurch werden unnötige Beeinträchtigungen der aerodynamischen Eigenschaften der Schaufel vermieden. Beispielsweise kann ein Mindestabstand von der Sehnenlängentangente des Schaufelblatts vorgesehen sein, der zumindest dem Kantenradius der Vorderkante und/oder Hinterkante entspricht. Da die Vorder- und/oder Hinterkante selbst nicht geändert wird, ist der aerodynamische Einfluss der Aufdickung besonders gering.

In einer weiteren vorteilhaften Ausgestaltung der Erfindung ist vorgesehen, dass die Dicke des Bereichs mit konstanter Dicke mindestens 0,1 mm oder mindestens 4% einer maximalen Profildicke, also beispielsweise oder auch mindestens 0,1 mm, 0,2 mm, 0,3 mm, 0,4 mm, 0,5 mm, 0,6 mm, 0,7 mm, 0,8 mm, 0,9 mm, 1,0 mm, 1,1 mm, 1,2 mm, 1,3 mm, 1,4 mm, 1,5 mm, 1,6 mm, 1,7 mm, 1,8 mm, 1,9 mm, 2,0 mm, 2,1 mm, 2,2 mm, 2,3 mm, 2,4 mm, 2,5 mm, 2,6 mm, 2,7 mm, 2,8 mm, 2,9 mm, 3,0 mm, 3,1 mm, 3,2 mm, 3,3 mm, 3,4 mm, 3,5 mm, 3,6 mm, 3,7 mm, 3,8 mm, 3,9 mm, 4,0 mm, 4,1 mm, 4,2 mm, 4,3 mm, 4,4 mm, 4,5 mm, 4,6 mm, 4,7 mm, 4,8 mm, 4,9 mm, 5,0 mm beträgt oder mehr beträgt und/oder maximal 1 mm, vorzugsweise 0,5 mm, oder maximal 16% einer maximalen Profildicke beträgt und/oder maximal einem Wert eines Radius der Vorderkante und/oder eines Radius der Hinterkante des Schaufelblatts entspricht. Die maximale Profildicke entspricht dabei dem Durchmesser des größtmöglichen Kreises, der vollständig in einen Profilquerschnitt einbeschrieben werden kann.

Es ist vorgesehen, dass sich die Aufdickung ausgehend von einem radial außenliegenden Endbereich oder Ende des Schaufelblatts über maximal 20 % und minimal 5% einer Kanalhöhe erstreckt. Die Aufdickung kann eine Höhe bzw. radiale Erstreckung nach innen aufweisen, die beispielsweise oder mindestens 20 %, 19 %, 18 %, 17 %, 16 %, 15 %, 14 %, 13 %, 12 %, 11 %, 10 %, 9 %, 8 %, 7 %, 6 %, 5 %, 4 %, 3 %, 2 %, 1 % oder weniger einer der Schaufel zugeordneten Kanalhöhe entspricht. Die Kanalhöhe kann generell der Schaufelhöhe (radiale Länge) entsprechen, wobei die Schaufel zumindest am Eintritt üblicherweise etwas größer als die Kanalhöhe ist, um das Betriebsmedium der Strömungsmaschine sicher aufzufangen und Ungenauigkeiten und Wärmedehnungen besser zu berücksichtigen.

Weitere Vorteile ergeben sich, indem eine axiale Erstreckung, insbesondere maximale axiale Erstreckung, der Aufdickung maximal 70 % und/oder minimal 10% einer Sehnenlänge des Schaufelblatts auf Höhe der Aufdickung beträgt. Unter einer Erstreckung von maximal 70 % der Sehnenlänge des Schaufelblatts sind dabei insbesondere Erstreckungen von 70 %, 69 %, 68 %, 67 %, 66 %, 65 %, 64 %, 63 %, 62 %, 61 %, 60 %, 59 %, 58 %, 57 %, 56 %, 55 %, 54 %, 53 %, 52 %, 51 %, 50 %, 49 %, 48 %, 47 %, 46 %, 45 %, 44 %, 43 %, 42 %, 41 %, 40 %, 39 %, 38 %, 37 %, 36 %, 35 %, 34 %, 33 %, 32 %, 31 %, 30 %, 29 %, 28 %, 27 %, 26 %, 25 %, 24 %, 23 %, 22 %, 21 %, 20 %, 19 %, 18 %, 17 %, 16 %, 15 %, 14 %, 13 %, 12 %, 11 %, 10 % oder weniger zu verstehen. Die maximale axiale Erstreckung oder Breite kann beispielsweise 2/3 der Sehnenlänge des Schaufelblatts auf Höhe der Aufdickung oder weniger sein.

Indem die Schaufel als insbesondere verstellbare Leitschaufel oder als Laufschaufel ausgebildet ist, können die erfindungsgemäßen Vorteile besonders flexibel für unterschiedliche Schaufeltypen und Stufen einer Strömungsmaschine realisiert werden.

In einer weiteren vorteilhaften Ausgestaltung der Erfindung ist vorgesehen, dass das Schaufelblatt durch ein radial äußeres Deckband und/oder durch ein radial inneres Deckband begrenzt ist. Hierdurch kann die Schaufel zusätzlich gegen Schwingungen stabilisiert und ein Strömungspfad des Betriebsmediums der zugeordneten Strömungsmaschine axial abgedichtet werden. Darüber hinaus können zwei oder mehr Schaufeln gegebenenfalls durch ein gemeinsames Deckband als Schaufelcluster miteinander verbunden sein.

Ein zweiter Aspekt der Erfindung betrifft eine Strömungsmaschine, insbesondere eine Gasturbine, mit einer Stator- und/oder Rotorbeschaufelung, welche erfindungsgemäß aerodynamisch günstig ist und gleichzeitig eine hohe mechanische Stabilität aufweist, indem die Stator- und/oder Rotorbeschaufelung mindestens eine Schaufel gemäß dem ersten Erfindungsaspekt umfasst. Weitere Merkmale und die sich hieraus ergebenden Vorteile sind den Beschreibungen des ersten Erfindungsaspekts zu entnehmen.

Ein dritter Aspekt der Erfindung betrifft einen Verdichter einer Strömungsmaschine, insbesondere einen Niederdruck- oder Hochdruckverdichter, mit einer Stator- und/oder Rotorbeschaufelung, welche erfindungsgemäß aerodynamisch günstig ist und gleichzeitig eine hohe mechanische Stabilität aufweist, indem die Stator- und/oder Rotorbeschaufelung mindestens eine Schaufel gemäß dem ersten Erfindungsaspekt umfasst. Weitere Merkmale und die sich hieraus ergebenden Vorteile sind den Beschreibungen des ersten Erfindungsaspekts zu entnehmen.

Ein vierter Aspekt der Erfindung betrifft eine Turbine einer Strömungsmaschine, insbesondere eine Niederdruck- oder Hochdruckturbine, mit einer Stator- und/oder Rotorbeschaufelung, welche erfindungsgemäß aerodynamisch günstig ist und gleichzeitig eine hohe mechanische Stabilität aufweist, indem die Stator- und/oder Rotorbeschaufelung mindestens eine Schaufel gemäß dem ersten Erfindungsaspekt umfasst. Weitere Merkmale und die sich hieraus ergebenden Vorteile sind den Beschreibungen des ersten Erfindungsaspekts zu entnehmen.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder von diesen abweichen. Dabei zeigt:
- Fig. 1: eine Perspektivansicht eines Ausführungsbeispiels einer erfindungsgemäßen Schaufel für eine Strömungsmaschine;
- Fig. 2: eine Seitenansicht der in Fig. 1 gezeigten Schaufel; und
- Fig. 3: eine Schnittansicht der Schaufel im Bereich einer Aufdickung.

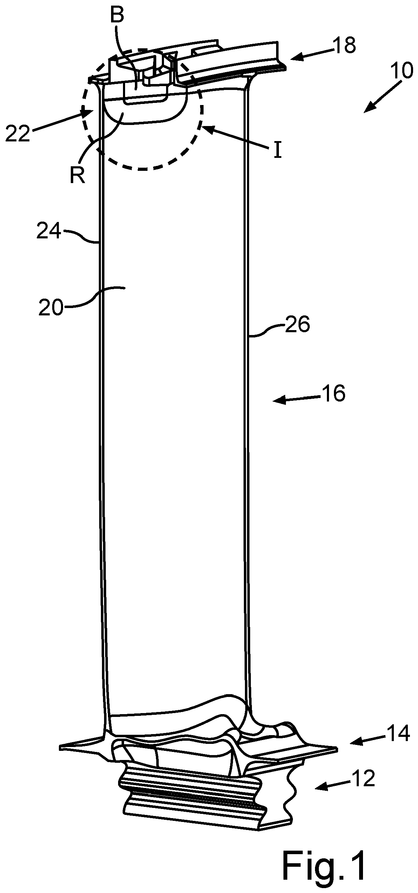

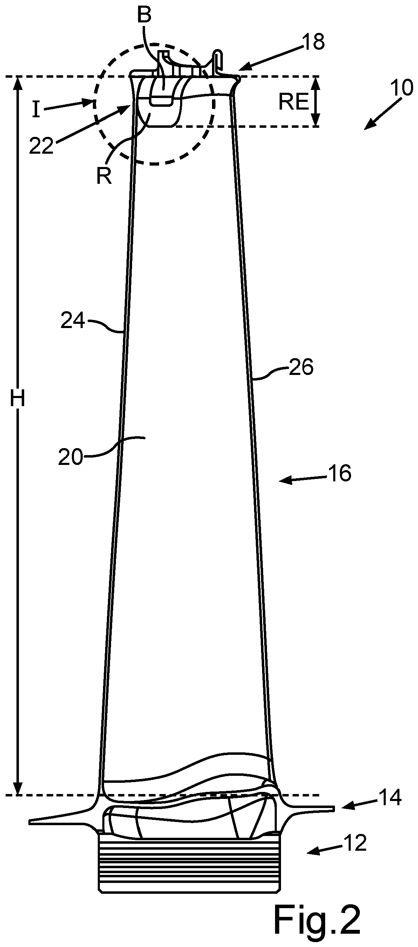

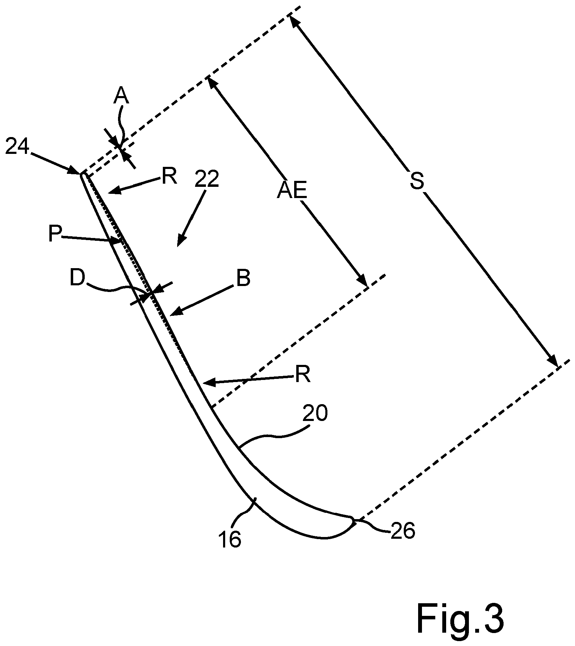

**Fig. 1** zeigt eine Perspektivansicht eines Ausführungsbeispiels einer erfindungsgemäßen Schaufel 10 für eine Strömungsmaschine, beispielsweise für ein Flugtriebwerk. Fig. 1 wird im Folgenden in Zusammenschau mit **Fig. 2** und **Fig. 3** erläutert, wobei Fig. 2 eine Seitenansicht der in Fig. 1 gezeigten Schaufel 10 und Fig. 3 eine Schnittansicht der Schaufel 10 im Bereich einer Aufdickung 22 zeigt. Die Schaufel 10 umfasst im gezeigten Ausführungsbeispiel einen Schaufelfuß 12, ein radial inneres Deckband 14, ein Schaufelblatt 16 sowie ein radial äußeres Deckband 18. An einer Druckseite 20 des Schaufelblatts 16 befindet sich im mit dem Bezugszeichen I markierten Bereich eine Aufdickung 22, die auch als "Patch" bezeichnet werden kann. Man erkennt, dass die Aufdickung 22 briefmarkenähnlich an der Druckseite 20 im radial äußeren Bereich des Schaufelblatt 16 zu einer Hinterkante 24 hin platziert ist und vorliegend eine im Wesentlichen rechteckige Form mit zwei abgerundeten Ecken besitzt. Die Aufdickung 22 weist einen Bereich B mit konstanter Dicke D auf, der U-förmig von einem Randbereich R umgeben ist, wobei die Dicke D des Randbereichs R ausgehend vom Bereich B mit konstanter Dicke D kontinuierlich bis zu einer normalen Profildicke des Schaufelblatts 16 ohne Aufdickung 22 abnimmt. Mit anderen Worten erfolgt der Übergang in das ursprüngliche aerodynamische Profil ausgehend vom Bereich B konstanter Dicke D kontinuierlich, so dass das Schaufelblatt 16 außerhalb der Aufdickung 22 wieder ein aerodynamisch optimiertes Schaufelprofil P aufweist. Nach oben bzw. radial außen hin weist die Aufdickung 22 keinen Randbereich R auf, sondern schließt an das radial äußere Deckband 18 an.

Die Aufdickung 22 ist in einem Abstand A von der Hinterkante 24 angeordnet. Der Abstand A entspricht etwa einem Radius HKR der Hinterkante 24. Die Hinterkante 24 selbst wird durch die Aufdickung 22 daher nicht verändert. Die maximale Gesamtlänge oder axiale Erstreckung AE der Aufdickung 22 beträgt vorliegend etwa 2/3 der Sehnenlänge S des Schaufelblatts 16 in Höhe der Aufdickung 22, so dass auch eine Vorderkante 26 des Schaufelblatts 16 unverändert bleibt. Der Bereich B mit konstanten Dicke D erstreckt sich in axialer Richtung vorliegend über etwa 2/3 der Gesamtlänge der Aufdickung 22, so dass der Randbereich R sich über etwa 1/3 der Gesamtlänge der Aufdickung 22 erstreckt.

Die maximale radiale Erstreckung RE oder Höhe der Aufdickung 22 beträgt vorliegend etwa 15 % oder weniger einer Kanalhöhe H, gemessen vom äußeren Deckband 18 aus. Die Kanalhöhe H wird, wie in Fig. 2 dargestellt, im Bereich der Hinterkante 24 ermittelt und entspricht der radialen Erstreckung oder Höhe des Schaufelblatts 16 zwischen den radialen Deckbändern 14, 18, gegebenenfalls zuzüglich einer Toleranz. Der Bereich B der Aufdickung 22, das heißt der Bereich mit konstantem Abstand zum ursprünglichen Schaufelprofil P, weist eine Dicke D auf, die vorliegend zwischen 0,1 mm und einem Wert gewählt sein kann, welcher dem Radius HKR der Hinterkante 24 entspricht.

Die in den Unterlagen angegebenen Parameterwerte zur Definition von Messbedingungen für die Charakterisierung von spezifischen Eigenschaften des Erfindungsgegenstands sind auch im Rahmen von Abweichungen - beispielsweise aufgrund von Messfehlern, Systemfehlern, DIN-Toleranzen und dergleichen - als vom Rahmen der Erfindung mitumfasst anzusehen.

### Bezugszeichenliste:

- 10: Schaufel
- 12: Schaufelfuß
- 14: Deckband
- 14: Deckbändern
- 16: Schaufelblatt
- 18: Deckband
- 20: Druckseite
- 22: Aufdickung
- 24: Hinterkante
- 26: Vorderkante
- I: Bereich
- B: Bereich konstanter Dicke
- D: Dicke
- R: Randbereich
- P: Schaufelblattprofil
- HKR: Radius der Hinterkante 24
- S: Sehenlänge
- H: Kanalhöhe
- RE: radiale Erstreckung
- AE: axiale Erstreckung

## Patentansprüche

1. Schaufel (10) für eine Strömungsmaschine, umfassend ein Schaufelblatt (16) mit mindestens einer Aufdickung (22) auf einer Druckseite (20) des Schaufelblatts (16), wobei sich die Aufdickung (22) ausgehend von einem radial außenliegenden Endbereich oder Ende des Schaufelblatts (16) über maximal 20 % und minimal 5% einer radialen Erstreckung des Schaufelblatts (16) erstreckt, **dadurch gekennzeichnet, dass**
- die Aufdickung (22) einen Bereich (B) mit konstanter Dicke (D) aufweist,
- der Bereich (B) mit konstanter Dicke (D) eine Oberfläche aufweist, welche mindestens 20 % einer Gesamtfläche der Aufdickung (22) entspricht,
- der Bereich (B) mit konstanter Dicke (D) zumindest im Wesentlichen rechteckig ausgebildet ist,
- die Aufdickung (22) wenigstens einen Randbereich (R) umfasst, dessen Dicke (D) ausgehend vom Bereich (B) mit konstanter Dicke (D) kontinuierlich bis zu einer normalen Profildicke des Schaufelblatts (16) ohne Aufdickung (22) abnimmt, und
- der Randbereich (R) den Bereich (B) mit konstanter Dicke (D) U-förmig umgibt.

2. Schaufel (10) nach Anspruch 1,
**dadurch gekennzeichnet, dass**
eine maximale Länge des Bereichs (B) mit konstanter Dicke (D) mindestens 1 % und/oder maximal 90 % einer maximalen Gesamtlänge (AE) der Aufdickung (22) entspricht.

3. Schaufel (10) nach Anspruch 1 oder 2,
**dadurch gekennzeichnet, dass**
die Aufdickung (22) und/oder der Bereich (B) mit konstanter Dicke (D) zumindest im Wesentlichen rechteckig ausgebildet ist mit einem Verhältnis von größerer zu kleinerer Rechteckseitenlänge von ≤ 10:1, vorzugsweise ≤ 5:1, insbesondere ≤ 2:1.

4. Schaufel (10) nach einem der Ansprüche 1 bis 3,
**dadurch gekennzeichnet, dass**
die Aufdickung (22) von einer Vorderkante (26) und/oder von einer Hinterkante (24) des Schaufelblatts (16) beabstandet ausgebildet ist.

5. Schaufel (10) nach einem der Ansprüche 1 bis 4,
**dadurch gekennzeichnet, dass**
die Dicke (D) des Bereichs (B) mit konstanter Dicke (D) mindestens 0,1 mm oder 4% einer maximalen Profildicke beträgt und/oder maximal 1 mm, vorzugsweise 0,5 mm, oder maximal 16% einer maximalen Profildicke beträgt und/oder maximal einem Wert eines Radius der Vorderkante (26) und/oder eines Radius (HKR) der Hinterkante (24) des Schaufelblatts (16) entspricht.

6. Schaufel (10) nach einem der Ansprüche 1 bis 5,
**dadurch gekennzeichnet, dass**
eine axiale Erstreckung, insbesondere maximale axiale Erstreckung, der Aufdickung (22) maximal 70 % und/oder minimal 10% einer Sehnenlänge (S) des Schaufelblatts (16) auf Höhe der Aufdickung (22) beträgt.

7. Schaufel (10) nach einem der Ansprüche 1 bis 6,
**dadurch gekennzeichnet, dass**
diese als insbesondere verstellbare Leitschaufel oder als Laufschaufel ausgebildet ist.

8. Schaufel (10) nach einem der Ansprüche 1 bis 7,
**dadurch gekennzeichnet, dass**
das Schaufelblatt (16) durch ein radial äußeres Deckband (18) und/oder durch ein radial inneres Deckband (14) begrenzt ist.

9. Strömungsmaschine, insbesondere Gasturbine, mit einer Stator- und/oder Rotorbeschaufelung umfassend mindestens eine Schaufel (10) gemäß einem der Ansprüche 1 bis 8.

10. Verdichter einer Strömungsmaschine, insbesondere Niederdruck- oder Hochdruckverdichter, mit einer Stator- und/oder Rotorbeschaufelung umfassend mindestens eine Schaufel (10) gemäß einem der Ansprüche 1 bis 8.

11. Turbine einer Strömungsmaschine, insbesondere Niederdruck- oder Hochdruckturbine, mit einer Stator- und/oder Rotorbeschaufelung umfassend mindestens eine Schaufel (10) gemäß einem der Ansprüche 1 bis 8.

## Claims

1. Blade (10) for a turbomachine, comprising an airfoil (16) having at least one thicker portion (22) on a pressure side (20) of the airfoil (16), the thicker portion (22) extending from a radially outer end region or end of the airfoil (16) over a maximum of 20% and a minimum of 5% of a radial extent of the airfoil (16), **characterized in that**
- the thicker portion (22) has a region (B) of constant thickness (D),
- the region (B) of constant thickness (D) has a surface area which corresponds to at least 20% of a total surface area of the thicker portion (22),
- the region (B) of constant thickness (D) is at least substantially rectangular,
- the thicker portion (22) comprises at least one edge region (R), the thickness (D) of which decreases continuously from the region (B) of constant thickness (D) to a normal profile thickness of the airfoil (16) without the thicker portion (22), and
- the edge region (R) surrounds the region (B) of constant thickness (D) in a U-shaped manner.

2. Blade (10) according to claim 1, **characterized in that** a maximum length of the region (B) of constant thickness (D) corresponds to at least 1 % and/or a maximum of 90% of a maximum overall length (AE) of the thicker portion (22).

3. Blade (10) according to either claim 1 or claim 2, **characterized in that** the thicker portion (22) and/or the region (B) of constant thickness (D) is at least substantially rectangular, with a ratio of the length of the long sides of the rectangle to the length of the short sides of the rectangle of ≤ 10:1, preferably ≤ 5:1, in particular ≤ 2:1.

4. Blade (10) according to any of claims 1 to 3, **characterized in that** the thicker portion (22) is spaced apart from a leading edge (26) and/or from a trailing edge (24) of the airfoil (16).

5. Blade (10) according to any of claims 1 to 4, **characterized in that** the thickness (D) of the region (B) of constant thickness (D) is at least 0.1 mm or 4% of a maximum profile thickness and/or at most 1 mm, preferably 0.5 mm, or at most 16% of a maximum profile thickness and/or corresponds at most to a value of a radius of the leading edge (26) and/or a radius (HKR) of the trailing edge (24) of the airfoil (16).

6. Blade (10) according to any of claims 1 to 5, **characterized in that** an axial extent, in particular a maximum axial extent, of the thicker portion (22) is at most 70% and/or at least 10% of a chord length (S) of the airfoil (16) at the level of the thicker portion (22).

7. Blade (10) according to any of claims 1 to 6, **characterized in that** it is designed as an in particular adjustable guide vane or as a rotor blade.

8. Blade (10) according to any of claims 1 to 7, **characterized in that** the airfoil (16) is delimited by a radially outer shroud (18) and/orby a radially inner shroud (14).

9. Turbomachine, in particular a gas turbine, comprising statorand/or rotor blades including at least one blade (10) according to any of claims 1 to 8.

10. Compressor of a turbomachine, in particular a low-pressure or high-pressure compressor, comprising stator and/or rotor blades including at least one blade (10) according to any of claims 1 to 8.

11. Turbine of a turbomachine, in particular a low-pressure or high-pressure turbine, comprising stator and/or rotor blades including at least one blade (10) according to any of claims 1 to 8.

## Revendications

1. Aube (10) destinée à une turbomachine, comprenant une pale d'aube (16) comportant au moins un renflement (22) sur un côté de pression (20) de la pale d'aube (16), le renflement (22) s'étendant depuis une zone d'extrémité ou une extrémité radialement extérieure de la pale d'aube (16) sur 20 % au plus et 5 % au moins d'une étendue radiale de la pale d'aube (16), **caractérisée en ce que**
- le renflement (22) présente une zone (B) d'épaisseur constante (D),
- la zone (B) d'épaisseur constante (D) présente une surface qui correspond à au moins 20 % de la surface totale du renflement (22),
- la zone (B) d'épaisseur constante (D) est au moins sensiblement rectangulaire,
- le renflement (22) comprend au moins une zone de bordure (R) dont l'épaisseur (D), à partir de la zone (B) d'épaisseur constante (D), diminue en continu jusqu'à une épaisseur de profil normale de la pale d'aube (16) sans le renflement (22), et
- la zone de bordure (R) entoure la zone (B) d'épaisseur constante (D) en forme de U.

2. Aube (10) selon la revendication 1,
**caractérisée en ce que**
une longueur maximale de la zone (B) d'épaisseur constante (D) correspond à 1 % au moins et/ou à 90 % au plus d'une longueur totale maximale (AE) du renflement (22).

3. Aube (10) selon la revendication 1 ou 2,
**caractérisée en ce que**
le renflement (22) et/ou la zone (B) d'épaisseur constante (D) sont réalisés de façon au moins sensiblement rectangulaire avec un rapport de la plus grande à la plus petite longueur de côté rectangulaire de ≤ 10:1, de préférence de ≤ 5:1, en particulierde ≤ 2:1.

4. Aube (10) selon l'une des revendications 1 à 3,
**caractérisée en ce que**
le renflement (22) est réalisé de façon espacée d'un bord d'attaque (26) et/ou d'un bord de fuite (24) de la pale d'aube (16).

5. Aube (10) selon l'une des revendications 1 à 4,
**caractérisée en ce que**
l'épaisseur (D) de la zone (B) d'épaisseur constante (D) est d'au moins 0,1 mm ou 4 % d'une épaisseur de profil maximale et/ou de 1 mm au plus, de préférence 0,5 mm, ou de 16 % au plus d'une épaisseur de profil maximale et/ou correspond au plus à une valeur d'un rayon du bord d'attaque (26) et/ou d'un rayon (HKR) du bord de fuite (24) de la pale d'aube (16).

6. Aube (10) selon l'une des revendications 1 à 5,
**caractérisée en ce que**
une étendue axiale, en particulier une étendue axiale maximale, du renflement (22) est de 70 % au plus et/ou de 10 % au moins d'une longueur de corde (S) de la pale d'aube (16) au niveau du renflement (22).

7. Aube (10) selon l'une des revendications 1 à 6,
**caractérisée en ce que**
elle est conçue en particulier comme une aube directrice réglable ou comme une aube mobile.

8. Aube (10) selon l'une des revendications 1 à 7,
**caractérisée en ce que**
la pale d'aube (16) est délimitée par un carénage radialement extérieur (18) et/ou parun carénage radialement intérieur (14).

9. Turbomachine, en particulier turbine à gaz, comportant un aubage de statoret/ou de rotor comprenant au moins une aube (10) selon l'une des revendications 1 à 8.

10. Compresseur d'une turbomachine, en particulier compresseurà basse ou haute pression, comportant un aubage de stator et/ou de rotor comprenant au moins une aube (10) selon l'une des revendications 1 à 8.

11. Turbine d'une turbomachine, en particulier turbine à basse ou haute pression, comportant un aubage de stator et/ou de rotor comprenant au moins une aube (10) selon l'une des revendications 1 à 8.
